# EUROPÄISCHE PATENTSCHRIFT

(11) **EP 1 212 549 B1**
(45) Veröffentlichungstag und Bekanntmachung des Hinweises auf die Patenterteilung: **11.02.2004**
(21) Anmeldenummer: 98955564.4
(22) Anmeldetag: 10.11.1998
(51) Int. Cl.: F16H 3/72

(54) **ANTRIEBSVORRICHTUNG**
DRIVE
DISPOSITIF D'ENTRAINEMENT

(30) Priorität: 19.11.1997 DE 19751231
(43) Veröffentlichungstag der Anmeldung: 12.06.2002
(73) Patentinhaber: ALSTOM, 75116 Paris (FR)
(72) Erfinder: HIEGEMANN, Michael, D-69124 Heidelberg (DE)
(74) Vertreter: Hellwig, Tillmann, Dr.
(86) Internationale Anmeldenummer: PCT/EP1998/007182
(87) Internationale Veröffentlichungsnummer: WO 1999/025993

(56) Entgegenhaltungen:
- EP-A- 0 138 739
- EP-A- 0 561 604
- DE-A- 3 640 146
- DE-B- 1 259 164
- FR-A- 609 961
- GB-A- 1 305 393
- PATENT ABSTRACTS OF JAPAN vol. 006, no. 120 (M-140), 3. Juli 1982 & JP 57 047054 A (HITACHI LTD), 17. März 1982
- PATENT ABSTRACTS OF JAPAN vol. 011, no. 399 (P-651), 26. Dezember 1987 & JP 62 162120 A (MITSUBISHI HEAVY IND LTD), 18. Juli 1987

## Beschreibung

Die Erfindung bezieht sich auf eine Antriebsvorrichtung gemäß dem Oberbegriff der Patentansprüche 1 und 2.

Solche Antriebsvorrichtungen werden für Arbeitsmaschinen benötigt, deren Drehzahl während des Betriebs verändert werden soll.

Aus der GB 1305393 A ist eine Antriebsvorrichtung bekannt, die eine mit konstanter Drehzahl arbeitende Hauptantriebsmaschine aufweist. Diese ist mit einer Arbeitsmaschine über ein Überlagerungsgetriebe verbunden ist, das mit einem Überlagerungsantrieb in Verbindung steht. Als Hauptantriebsmaschine und als Hilfsmaschine ist jeweils ein Wechselstrom-Elektromotor vorgesehen. Beide werden von derselben Stromquelle gespeist. Die Verwendung von Antriebsmaschinen mit unterschiedlichen Leistungen, die von unterschiedlichen Spannungsebenen gespeist werden, ist hier nicht möglich. Die Nutzung der Antriebsvorrichtung ist damit sehr eingeschränkt.

In der EP 561604 A1 ist die Verbindung eines Schwungrades mit einem Planetengetriebe beschrieben. Das Schwungrad wird von einem Motor angetrieben und als Hauptantriebsmaschine genutzt. Als Hilfsmaschine wird ein Servomotor oder eine hydrodynamische Bremse verwendet.

Aus dem JP Patent Abstract Nr. 57047054 ist lediglich ein System mit drei drehzahlverstellbaren Antriebsmotoren bekannt.

In der Druckschrift VGB Kraftwerkstechnik 72 (1992), T. Weiß und P. Boiger, Seiten 774 ff., ist ein drehzahlgeregelter Antrieb für Kesselspeisewasserpumpen beschrieben. Eine mit nahezu konstanter Drehzahl arbeitende Antriebsmaschine ist über ein Planetenüberlagerungsgetriebe mit einer Arbeitsmaschine verbunden. Das Planetenüberlagerungsgetriebe umfaßt ein Hohlrad mit einer äußeren und einer inneren Verzahnung, ein oder mehrere Planetenräder, deren Verzahnungen in die innere Verzahnung des Hohlrads eingreifen, und ein Sonnenrad, dessen Verzahnung in die der Planetenräder eingreift. Die Achsen der Planetenräder sind auf dem mit der Antriebsmaschine verbundenen Planetenträger montiert und rotieren um das mit der Abtriebswelle verbundene Sonnenrad. Die Verzahnungen der Planetenräder und des Sonnenrades greifen ebenfalls ineinander, womit eine Drehung der Abtriebsachse erreicht wird. Um eine Drehzahlverstellung der Arbeitsmaschine zu erzielen, kann das Hohlrad entweder gleich- oder gegensinnig zur Hauptantriebsrichtung bewegt werden, wodurch eine Erniedrigung bzw. eine Erhöhung der Abtriebsdrehzahl im Vergleich zum stehenden Hohlrad (Nenndrehzahl) erreicht wird. Zum Antrieb dieser Überlagerung wird ein geschlossener Hydrostatikkreislauf mit Axialkolbenmaschinen verwendet. Eine mit konstanter Drehzahl arbeitende Verstelleinheit mit veränderbarem Kolbenhub bestimmt die Durchflußmenge der Flüssigkeit im Hydrostatikkreislauf und somit die Drehzahl der Konstanteinheit mit gleichbleibendem Kolbenhub. Letztere arbeitet in einer Drehrichtung als Motor oder in der Gegenrichtung als Pumpe und ist über einen Räderzug mit der äußeren Verzahnung des Hohlrads verbunden. Die Verstelleinheit steht über einen weiteren Räderzug mit der Hauptantriebswelle in Verbindung, von der sie bei Steigerung der Abtriebsdrehzahl über den Nennpunkt hinaus Leistung aufnimmt oder an die sie bei Absenkung der Abtriebsdrehzahl unter den Nennpunkt Leistung zurückführt. Bei dieser Anordnung ist der Drehzahlverstellbereich auf Grund der gegebenen Bauart begrenzt, was die Einsatzmöglichkeit der Arbeitsmaschine beschränkt. Von entscheidendem Nachteil ist jedoch, daß ein guter Wirkungsgrad des Antriebssystems nur bei geringen Überlagerungsdrehzahlen erreicht wird, da sich der Wirkungsgrad des hydrostatischen Überlagerungsantriebs mit steigender Überlagerungsdrehzahl rasch verschlechtert. Die gesamte Vorrichtung weist zudem einen komplexen Aufbau auf, wodurch ihr Bau relativ teuer ist.

Der Erfindung liegt die Aufgabe zugrunde, eine Antriebsvorrichtung aufzuzeigen, mit der die Drehzahl einer Arbeitsmaschine stufenlos verändert werden kann, und die zudem einen sehr einfachen und kostengünstigen Aufbau aufweist.

Diese Aufgabe wird durch die Merkmale der Patentansprüche 1 und 2 gelöst.

Das Überlagerungsgetriebe der erfindungsgemäßen Antriebsvorrichtung ist mit mindestens einem Planetenrad, einem Träger für wenigstens ein Planetenrad, einem Sonnenrad und einem Hohlrad versehen, dessen Rand innen und außen Verzahnungen aufweist. Die Verzahnungen der Planetenräder greifen in die innen liegende Verzahnung des Hohlrads und in die Verzahnung des Sonnenrads ein. Die Achsen der Planetenräder, des Hohlrads, der Planetenträger und des Sonnenrads sowie die des Überlagerungsantriebs sind parallel zueinander ausgerichtet. Die Achse des Sonnenrads wird als Abtrieb genutzt und ist mechanisch mit der Arbeitsmaschine verbunden. Diese Anordnung wird vorzugsweise bei schnellaufenden Arbeitsmaschinen eingesetzt, deren Drehzahl über der Drehzahl der Hauptantriebsmaschine liegt. Liegt die Drehzahl der Arbeitsmaschine unter derjenigen der Hauptantriebsmaschine, wird die Welle der Hauptantriebsmaschine mit dem Sonnenrad in Verbindung gebracht. Entsprechend verbindet man die Welle der Arbeitsmaschine mit dem Planetenträger. Der Überlagerungsantrieb wird elektronisch gesteuert. Er weist einen Frequenzumrichter auf, dem ein Elektromotor nachgeschaltet ist, Das Arbeitsritzel dieses Elektromotors steht mit dem Hohlrad des Überlagerungsgetriebes mechanisch in Verbindung. Der drehzahlveränderliche Überlagungsantrieb überträgt abhängig von der Größe des Drehzahlverstellbereichs und der Leistungscharakteristik der Arbeitsmaschine nur eine verhältnismäßig geringe Leistung. Deshalb ist im Vergleich zur Leistung des Hauptantriebs lediglich ein relativ kleiner und damit kostengünstiger Frequenzumrichter erforderlich. Erfindungsgemäß kann auch ein Frequenzumrichter mit Rückspeisung verwendet werden. In diesem Fall kann die Abtriebsdrehzahl gegenüber dem Auslegungspunkt bei stehendem Hohlrad sowohl erhöht als auch erniedrigt werden. In letzterem Fall arbeitet der Überlagerungsmotor als Generator. Über den Frequenzumrichter wird dann elektrische Leistung in das Netz zurückgespeist.

Bei einer Variante der erfindungsgemäßen Antriebsvorrichtung ist die Welle des Überlagerungsantriebs mit einem zweiten Ritzel versehen, das als Anwurfritzel genutzt wird. Es ist ebenso wie das Arbeitsritzel axial verschiebbar ausgebildet. Das Anwurfritzel ist in die Verzahnung eines weiteren, auf der Hauptantriebswelle befindlichen Zahnrades einrückbar. Hierfür können auch in Abhängigkeit der jeweiligen konstruktiven Erfordernisse eine oder mehrere Stirnradstufen verwendet werden. Eine Außenverzahnung des Planetenträgers kann dafür ebenfalls genutzt werden. Ferner können Anwurf- und Arbeitsritzel identisch sein. Bei dieser Ausführungsform der Erfindung kann der Motor des Überlagerungsantriebs zum sanften Anwurf des Hauptantriebs und der Arbeitsmaschine genutzt und damit auf einen Anwurfmotor verzichtet werden. Während des Anwurfs steht das Arbeitsritzel des Überlagerungsantriebs nicht mit dem Hohlrad in Verbindung. Das Hohlrad wird während des Anwurfvorgangs durch eine geeignete Arretierungsvorrichtung mechanisch arretiert. Nachdem die Hauptantriebsmaschine eine vorzugebende Drehzahl erreicht hat, wird das Anwurfritzel von der Verzahnung auf der Hauptantriebswelle gelöst, und die Energiezufuhr zum Hauptantrieb eingeschaltet. Das Ausrücken des Anwurfritzels kann auch nach dem Einschalten der Energiezufuhr für den Hauptantrieb erfolgen. Nach dem Ausrücken des Anwurfritzels wird der Überlagerungsmotor zum Stillstand gebracht, und das Arbeitsritzel des Überlagerungsantriebs in die äußere Verzahnung des stehenden Hohlrad eingerückt. Nach dem Lösen der Arretierung des Hohlrads kann der drehzahlvariable Überlagerungsbetrieb aufgenommen werden. Die bei der beschriebenen Einrichtung erforderlichen Schaltvorgänge sind somit bei gleicher Umfangsgeschwindigkeit der entsprechenden Verzahnungen oder im Stand vorzunehmen. Dieser Anwurfvorgang setzt eine weitgehend entlastete Arbeitsmaschine voraus. Gegebenenfalls kann auch eine Stirnradstufe zwischengeschaltet werden Ist diese Entlastung nicht möglich, ist eine geeignete Kupplung zwischen der Abtriebswelle des Antriebssystems und der Welle der Arbeitsmaschine vorzusehen.

Ein weiterer Betriebszustand wird erreicht, wenn die Hauptantriebswelle durch eine zusätzliche Brems- oder Blockiereinrichtung arretiert wird. in diesem Fall kann durch das Antreiben des Hohlrades mit Hilfe des Überlagerungsantriebs ein drehzahlgeregelter Betrieb der Arbeitsmaschine bei kleinen Leistungen durchgeführt werden.

Wird als Hauptantriebsmaschine ein Elektromotor verwendet, kann dieser zusammen mit dem elektrischen Überlagerungsantrieb an eine gemeinsame Wechselspannungsquelle, beispielsweise das elektrische Netz, angeschlossen werden. Die beschriebene Anwurfvorrichtung kann auch für elektrische Hauptantriebsmaschinen in Form Asynchronmaschinen verwendet werden, die eigentlich ohne Anwurfmotor auskommen. Sie erlaubt eine geringere Dimensionierung der elektrischen Verkabelung und Schaltanlagen, da hohe Einschattströme vermieden werden.

Die erfindungsgemäße Antriebsvorrichtung weist eine kompakte Bauweise auf, und läßt sich vollständig aus Standardkomponenten zusammenbauen. Sie verfügt über einen hohen Wirkungsgrad sowohl bei Teil- als auch bei Vollast, da die verwendeten Komponenten alle hohe Wirkungsgrade aufweisen, die nicht wesentlich von der Drehzahl abhängen.

Weitere erfinderische Merkmale sind in den abhängigen Ansprüchen gekennzeichnet.

Die Erfindung wird nachfolgend an Hand von schematischen Zeichnungen näher erläutert.

Es zeigen:
Fig. 1 eine erfindungsgemäße Antriebsvorrichtung,
Fig. 2 das Überlagerungsgetriebe in Richtung der Achsen der Räder gesehen,
Fig. 3 eine Variante der in Fig. 1 dargestellten Antriebsvorrichtung,
Fig. 4 eine weitere Variante der in Fig. 1 dargestellten Antriebsvorrichtung.

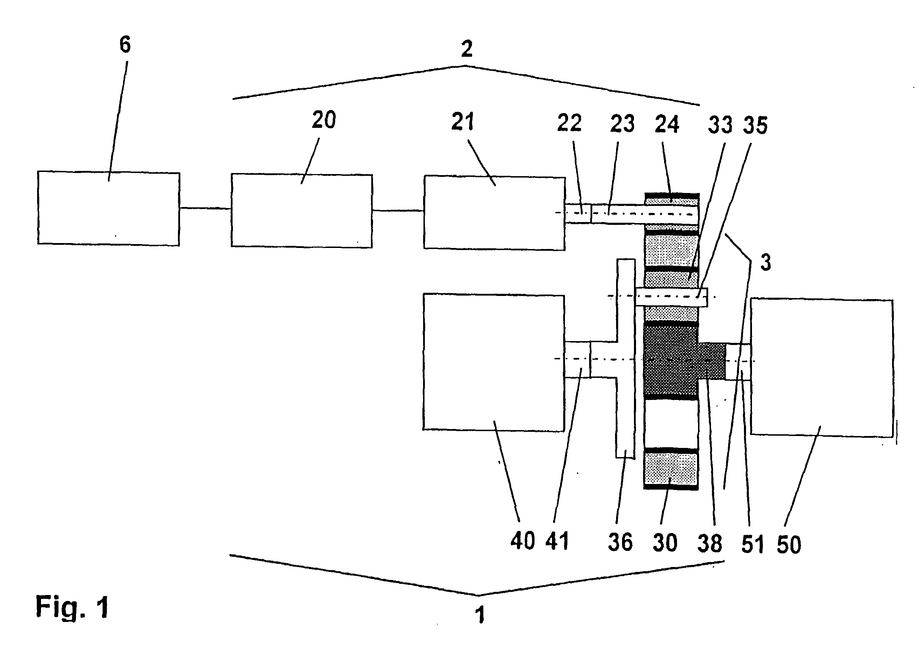

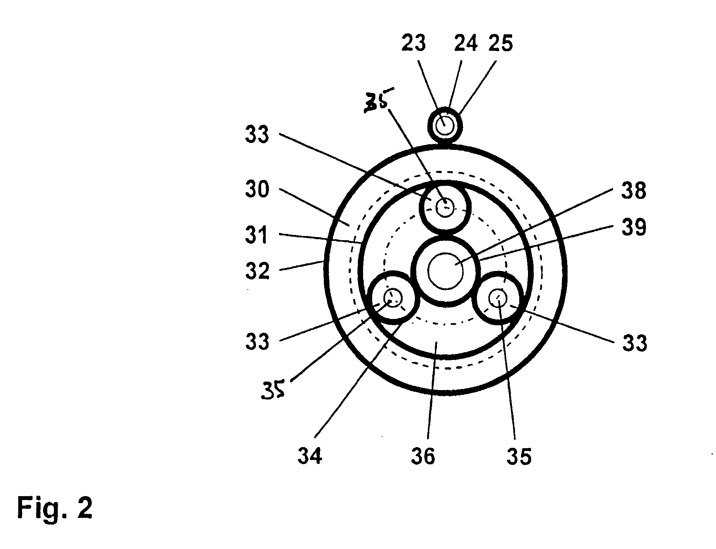

Die in Fig. 1 dargestellte Antriebsvorrichtung 1 weist als Kernstück einen elektronisch gesteuerten Überlagerungsantrieb 2 und ein Planeten-Überlagerungsgetriebe 3 auf. Der Antriebsvorrichtung 1 sind ferner eine Hauptantriebsmaschine 4 und eine Arbeitsmaschine 5 zugeordnet. Der Überlagerungsantrieb 2 besteht bei dem hier dargestellten Ausführungsbeispiel aus einem Frequenzumrichter 20, dem ein Elektromotor 21 nachgeschaltet ist. Der Frequenzumrichter 20 kann mit oder ohne Rückspeisung (hier nicht dargestellt) ausgebildet sein und ist an eine Wechselspannungsquelle 6 angeschlossen. Die Welle 22 des Elektromotors 21 ist mechanisch mit einer Welle 23 verbunden. Diese ist mit einem Arbeitsritzel 24 versehen, das zur mechanischen Ankopplung an das Überlagerungsgetriebe 3 dient. Wie anhand von Fig. 2 zu sehen ist, weist das Überlagerungsgetriebe 3 ein Hohlrad 30 auf, das bei dem hier dargestellten Ausführungsbeispiel mit einer inneren Verzahnung 31 und einer äußeren Verzahnung 32 versehen ist. Die Verzahnungen 31 und 32 sowie alle nachfolgend beschriebenen Verzahnungen sind in den Figuren nur schematisch in Form einer dick gezeichneten Linie dargestellt. In die äußere Verzahnung 32 kann die Verzahnung 25 des Arbeitsritzels 24 eingreifen. In die innere Verzahnung 31 des Hohlrads 30 greift mindestens ein Planetenrad 33 mit der Verzahnung 34 ein. Bei dem hier dargestellten Ausführungsbeispiel sind drei Planetenräder 33 vorgesehen. Fig. 1 zeigt, daß der Planetenträger 36 mit der Welle 41 der Hauptantriebsmaschine 4 verbunden ist. Die Planetenräder 33 sind mit den Achsen 35 auf dem Planetenträger 36 gelagert. Die Verzahnungen 34 der Planetenräder 33 greifen femer in die Verzahnung 39 eines Sonnenrads 38. Die Achse des Sonnenrads 38 dient als Abtrieb und steht mechanisch mit der Arbeitsmaschine 5 in Verbindung. Sämtliche Achsen der Antriebsvorrichtung 1, welches die Achse des Hauptantriebs 41, die des Planetenträgers 36, die Achsen der Planetenräder 35 sowie die des Überlagerungsantriebs 22, 23 und die mit dem Sonnenrad 38 verbundene Abtriebsachse umfaßt, können parallel zueinander verlaufen.

Als Hauptantriebsmaschine 4 kann ein Elektromotor, aber auch jede beliebige Antriebsmaschine genutzt werden. Bei Verwendung eines Elektromotors kann dieser an dieselbe Wechselspannungsquelle 6 wie der Frequenzumrichter 20, eventuell unter Zwischenschaltung eines Transformators (hier nicht dargestellt), angeschlossen werden. Ebenso kann zwischen der Wechselspannungsquelle 6 und dem Frequenzumrichter 20 ein Transformator (hier nicht dargestellt) zwischengeschaltet werden.

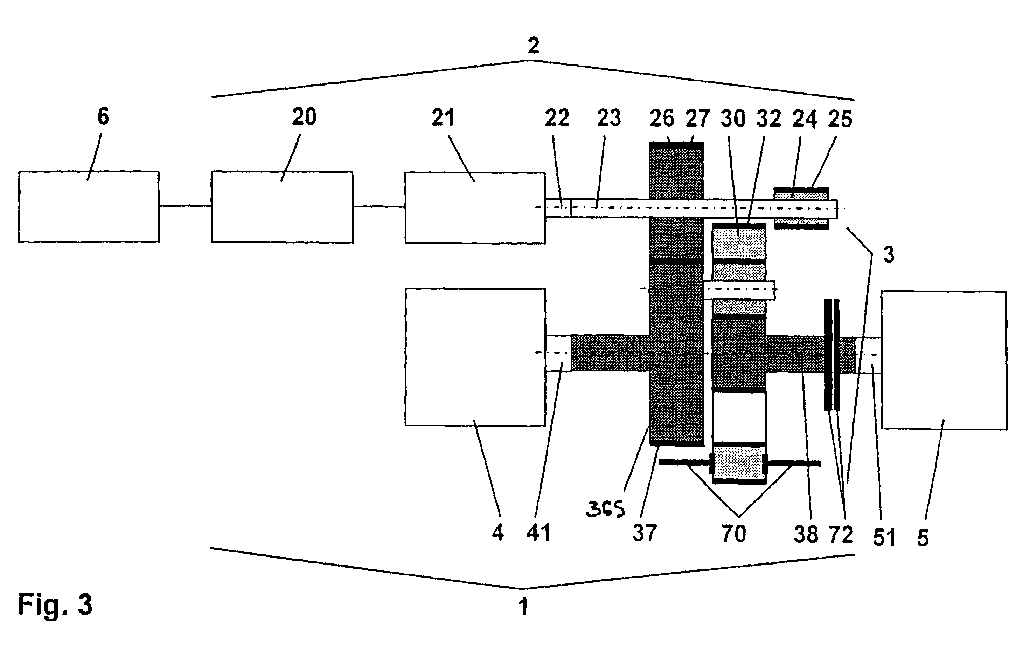

Die in Fig. 3 gezeigte Antriebsvorrichtung 1 ist im wesentlichen baugleich mit der in Fig. 1 dargestellten und in der zugehörigen Beschreibung erläuterten Antriebsvorrichtung 1. Gleiche Bauelemente sind deshalb mit gleichen Bezugszeichen versehen. Der Unterschied besteht darin, daß die Welle 23 des Überlagerungsantriebs 2 zusätzlich mit einem Anwurfritzel 26 versehen ist. Ferner ist eine Bremse 70 vorgesehen, mit welcher das Hohlrad 30 arretiert werden kann. Damit ist es möglich, den Überlagerungsantrieb 2 zum Anwurf der Hauptantriebsmaschine 4 zu verwenden. Hierfür ist ein mit der Antriebswelle 41 verbundenes Stirnrad erforderlich. Bei dem hier dargestellten Ausführungsbeispiel dient der Träger 36S für die Planetenräder 33 gleichzeitig als Stirnrad. Seine Abmessungen sind so bemessen, daß er mit dem Anwurfritzel 26 in Kontakt gebracht werden kann. Zusätzlich ist er außen mit einer Verzahnung 37 versehen, in welche die Verzahnung 27 des Anwurfritzels 26 eingreifen kann. Während des Anwerfens besteht kein Kontakt zwischen dem Arbeitsritzel 24 und dem Hohlrad 30. Ist die Hauptantriebsmaschine 4 in Gang gebracht worden, wird das Anwurfritzel 26 ausgerückt und die Verzahnung 25 des Arbeitsritzels 24 in die äußere Verzahnung 32 des Hohlrads 30 eingerückt. Erfindungsgemäß besteht die Möglichkeit, das Arbeitsritzel 24 auch als Anwurfritzel zu nutzen. Kann die Arbeitsmaschine 5 nicht genügend entlastet werden, kann sie während des Anwurfvorgangs durch eine Kupplung 72 vom der Antriebsvorrichtung 1 getrennt werden. Die Kupplung 72 ist zwischen der Abtriebswelle 38 des Antriebsvorrichtung 1 und der Welle 51 der Arbeitsmaschine 5 installiert.

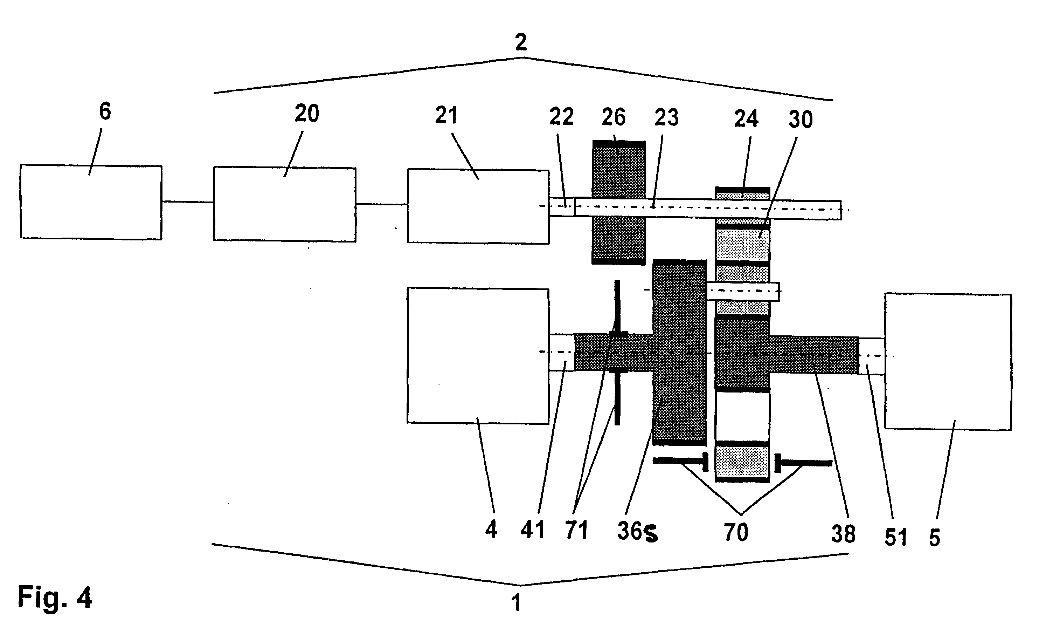

Die in Fig. 4 gezeigte Antriebsvorrichtung 1 ist im wesentlichen baugleich mit der in Fig. 3 dargestellten und in der zugehörigen Beschreibung erläuterten Antriebsvorrichtung 1. Der Unterschied besteht darin, daß diese Antriebsvorrichtung 1 für einen drehzahlverstellbaren Schwachlastbetrieb eingesetzt werden kann. Hierfür wird das Anwurfritzel 26 ausgerückt und das Arbeitsritzel 24 steht in Kontakt mit dem Hohlrad 30. Die Arretierungsvorrichtung 70 des Hohlrads 30 ist gelöst, während die Achse des Trägers 36S für die Planetenräder 33 durch eine Arretierungsvorrichtung 71 festgehalten wird. Ist die Hauptantriebsmaschine 4 jedoch mit dem Sonnenrad 38 verbunden, wirkt die Arretierungsvorrichtung 71 auf die Achse des Sonnenrads 38.

## Patentansprüche

1. Antriebsvorrichtung mit wenigstens einer mit konstanter Drehzahl arbeitenden Hauptantriebsmaschine (4), die mit einer Arbeitsmaschine (5) über ein Überlagerungsgetriebe (3) mechanisch verbunden ist, das mit einem Überlagerungsantrieb (2) in mechanischer Verbindung steht, **dadurch gekennzeichnet, daß** das Überlagerungsgetriebe (3) mindestens ein Planetenrad (33), einen Träger (36, 36S) für wenigstens ein Planetenrad (33), ein Sonnenrad (38) und ein Hohlrad (30) aufweist, dessen Rand innen und außen mit Verzahnungen (31, 32) versehen ist, daß die Verzahnungen (34) der Planetenräder (33) in die innen liegende Verzahnung (31) des Hohlrads (30) und in die Verzahnung (39) des Sonnenrads (38) eingreifen, daß die Achsen von Hohlrad (30), Planetenrädern (33), Planetenträger (36) und Sonnenrad (38) sowie die des Überlagerungsantriebs (2) parallel zueinander ausgerichtet sind, daß die Welle (41) der Hauptantriebsmaschine (4) mit dem Träger (36, 36S) für ein oder mehrere Planetenräder (33) verbunden ist, und die Achse des Sonnenrads (38) als Abtrieb vorgesehen ist, mit dem die Arbeitsmaschine (5) mechanisch verbindbar ist, daß der Überlagerungsantrieb (2) elektronisch gesteuert ist und einen Frequenzumrichter (20) mit nachgeschaltetem Elektromotor (21) aufweist, dessen Arbeitsritzel mit dem Hohlrad (30) mechanisch in Verbindung steht.

2. Antriebsvorrichtung mit wenigstens einer mit konstanter Drehzahl arbeitenden Hauptantriebsmaschine (4), die mit einer Arbeitsmaschine (5) über ein Überlagerungsgetriebe (3) mechanisch verbunden ist, das mit einem Überlagerungsantrieb (2) in mechanischer Verbindung steht, **dadurch gekennzeichnet, daß** das Überlagerungsgetriebe (3) mindestens ein Planetenrad (33), einen Träger (36, 36S) für wenigstens ein Planetenrad (33), ein Sonnenrad (38) und ein Hohlrad (30) aufweist, dessen Rand innen und außen mit Verzahnungen (31, 32) versehen ist, daß die Verzahnungen (34) der Planetenräder (33) in die innen liegende Verzahnung (31) des Hohlrads (30) und in die Verzahnung (39) des Sonnenrads (38) eingreifen, daß die Achsen von Hohlrad (30), Planetenrädern (33), Planetenträger (36) und Sonnenrad (38) sowie die des Überlagerungsantriebs (2) parallel zueinander ausgerichtet sind, daß die Welle (41) der Hauptantriebsmaschine (4) mit der Achse des Sonnenrads (38) in mechanischer Verbindung steht, daß die Arbeitsmaschine (5) mit dem Träger (36, 36S) für ein oder mehrere Planetenräder (33) mechanisch verbunden ist, daß der Überlagerungsantrieb (2) elektronisch gesteuert ist und einen Frequenzumrichter (20) mit nachgeschaltetem Elektromotor (21) aufweist.

3. Antriebsvorrichtung nach einem der Ansprüche 1 oder 2, **dadurch gekennzeichnet, daß** die Welle (23) des Überlagerungsantriebs (2) mit einem Anwurfritzel (26) versehen ist, das in die Verzahnung (37) eines Stirnrades (36S) einrückbar ist, das mit der Welle (41) der Hauptantriebsmaschine (4) in mechanischer Verbindung steht.

4. Antriebsvorrichtung nach einem der Ansprüche 1 oder 3, **dadurch gekennzeichnet, daß** der außen mit einer Verzahnung (37) versehene Träger (36S) der Planetenräder (33) als Stirnrad nutzbar ist.

5. Antriebsvorrichtung nach einem der Ansprüche 1 bis 4, **dadurch gekennzeichnet, daß** das Arbeitsritzel (24) auch als Anwurfritzel nutzbar ist.

6. Antriebsvorrichtung nach einem der Ansprüche 1 bis 5, **dadurch gekennzeichnet, daß** das Hohlrad (30) mit einer Arretierungsvorrichtung (70) mechanisch arretierbar ist.

7. Antriebsvorrichtung nach einem der Ansprüche 1 bis 6, **dadurch gekennzeichnet, daß** der Träger (36, 36S) der Planetenräder (33) oder das Sonnenrad (38) mit einer Arretierungsvorrichtung (71) mechanisch arretierbar sind.

8. Antriebsvorrichtung nach einem der Ansprüche 1 bis 7, **dadurch gekennzeichnet, daß** die Arbeitsmaschine (4) mit Hilfe einer Kupplung (72) von der Antriebsvorrichtung (1) abtrennbar ist.

9. Antriebsvorrichtung nach einem der Ansprüche 1 bis 8, **dadurch gekennzeichnet, daß** der Überlagerungsantrieb (2) einen Frequenzumrichter (20) mit einer Energierückführung aufweist.

## Claims

1. A drive with at least one main drive machine (4) working at constant speed which is mechanically connected to a working machine (5) by way of a superimposed gear (3) which is mechanically connected to a superimposed drive (2), **characterised in that** the superimposed gear (3) has at least one planet pinion (33), a carrier (36, 36S) for at least one planet pinion (33), a sun wheel (38) and a hollow wheel (30) whose periphery is provided with serrations (31, 32) on the inside and on the outside, that the serrations (34) of the planet pinions (33) engage in the internally located serration (31) of the hollow wheel (30) and in the serration (39) of the sun wheel (38), that the axes of the hollow wheel (30), planet pinions (33), planet carrier (36) and sun wheel (38) as well as that of the superimposed drive (2) are aligned in parallel to one another, that the shaft (41) of the main drive machine (4) is connected with the carrier (36, 36S) for one or several planet pinions (33), and the axis of the sun wheel (38) is envisaged as an output end with which the working machine (5) is mechanically connectable, that the superimposed drive (2) is electronically controlled and has a frequency converter (20) with a subsequently arranged electromotor (21) whose working pinion shaft is mechanically connected to the hollow wheel (30).

2. A drive with at least one main drive machine (4) working at constant speed which is mechanically connected to a working machine (5) by way of a superimposed gear (3) which is mechanically connected to a superimposed drive (2), **characterised in that** the superimposed gear (3) has at least one planet pinion (33), a carrier (36, 36S) for at least one planet pinion (33), a sun wheel (38) and a hollow wheel (30) whose periphery is provided with serrations (31, 32) on the inside and on the outside, that the serrations (34) of the planet pinions (33) engage in the internally located serration (31) of the hollow wheel (30) and in the serration (39) of the sun wheel (38), that the axes of the hollow wheel (30), planet pinions (33), planet carrier (36) and sun wheel (38) as well as that of the superimposed drive (2) are aligned in parallel to one another, that the shaft (41) of the main drive machine (4) is mechanically connected to the axis of the sun wheel (38), that the working machine (5) is mechanically connected with the carrier (36, 36S) for one or several planet pinions (33), that the superimposed drive (2) is electronically controlled and has a frequency converter (20) with a subsequently arranged electromotor (21).

3. A drive according to one of the Claims 1 or 2, **characterised in that** the shaft (23) of the superimposed drive (2) is provided with a starting pinion (26) which is inwardly moveable into the serration (37) of a spur wheel (36S) which is mechanically connected to the shaft (41) of the main drive machine (4).

4. A drive according to one of the Claims 1 or 3, **characterised in that** the carrier (36S) of the planet pinions (33), where this said carrier is provided with an outer serration (37), is useable as a spur wheel.

5. A drive according to one of the Claims 1 to 4, **characterised in that** the working pinion (24) is also useable as a starting pinion.

6. A drive according to one of the Claims 1 to 5, **characterised in that** the hollow wheel (30) is mechanically lockable with a locking device (70).

7. A drive according to one of the Claims 1 to 6, **characterised in that** the carrier (36, 36S) of the planet pinions (33) or the sun wheel (38) are mechanically lockable with a locking device (71).

8. A drive according to one of the Claims 1 to 7, **characterised in that** the working machine (4) is separable from the drive with the help of a coupling (72).

9. A drive according to one of the Claims 1 to 8, **characterised in that** the superimposed drive (2) has a frequency converter (20) with an energy feedback.

## Revendications

1. Dispositif d'entraînement présentant au moins une machine d'entraînement principal (4) fonctionnant à une vitesse de rotation constante, qui est reliée à une machine-outil (5) par voie mécanique à l'aide d'une transmission mixte (3), laquelle est reliée à un entraînement mixte (2) par voie mécanique, **caractérisé en ce que** la transmission mixte (3) présente au moins une roue planétaire (33), une cage (36,36S) destinée à au moins une roue planétaire (33), une roue solaire (38) et une roue creuse (30), dont le bord est doté à l'intérieur et à l'extérieur de dentures (31, 32), **en ce que** les dentures (34) des roues planétaires (33) s'engrènent dans la denture intérieure (31) de la roue creuse (30) et dans la denture (39) de la roue solaire (38), **en ce que** les axes de la roue creuse (30), des roues planétaires (33), de la cage de transmission planétaire (36) et de la roue solaire (38) ainsi que celui de l'entraînement mixte (2) sont orientés parallèlement les uns aux autres, **en ce que** l'arbre (41) de la machine d'entraînement principal (4) est relié à la cage (36,36S) destinée à une ou plusieurs roues planétaires (33), et l'axe de la roue solaire (38) est prévu sous la forme d'un élément commandé, qui peut être relié par voie mécanique à la machine productrice (5), **en ce que** l'entraînement mixte (2) est commandé par voie électronique et présente un convertisseur de fréquence (20) avec un moteur électrique (21) monté en aval, dont le pignon fonctionnel est relié à la roue creuse (30) par voie mécanique.

2. Dispositif d'entraînement présentant au moins une machine d'entraînement principal (4) fonctionnant à une vitesse de rotation constante, qui est reliée à une machine productrice (5) par l'intermédiaire d'une transmission mixte (2) par voie mécanique, laquelle est reliée par voie mécanique à un entraînement mixte (2), **caractérisé en ce que** la transmission mixte (3) présente au moins une roue planétaire (33), une cage (36, 36S) destinée à au moins une roue planétaire (33), une roue solaire (38) et une roue creuse (30), dont le bord est doté à l'intérieur et à l'extérieur de dentures (31, 32), **en ce que** les dentures (34) des roues planétaires (33) s'engrènent dans la denture intérieure (31) de la roue creuse (30) et dans la denture (39) de la roue solaire (38), **en ce que** les axes de la roue creuse (30), des roues planétaires (33), de la cage de transmission planétaire (36) et de la roue solaire (38) ainsi que celui de la transmission mixte (2) sont disposés parallèlement les uns aux autres, **en ce que** l'arbre (41) de la machine d'entraînement principal (4) est relié par voie mécanique à l'axe de la roue solaire (38), **en ce que** la machine productrice (5) est reliée par voie mécanique à la cage (36, 36S) destinée à une ou plusieurs roues planétaires (33), **en ce que** la transmission mixte (2) est commandée par voie électronique et présente un convertisseur de fréquence (20) avec un moteur électrique (21) monté en aval.

3. Dispositif d'entraînement selon l'une quelconque des revendications 1 ou 2, **caractérisé en ce que** l'arbre (23) de la transmission mixte (2) est doté d'un pignon de démarrage (26), qui peut être introduit dans la denture (37) d'une roue droite (36S), laquelle est reliée par voie mécanique à l'arbre (41) de la machine d'entraînement principal (4).

4. Dispositif d'entraînement selon l'une quelconque des revendications 1 ou 3, **caractérisé en ce que** la cage (36S) dotée à l'extérieur d'une denture (37) des roues planétaires (33) peut être utilisée comme roue droite.

5. Dispositif d'entraînement selon l'une quelconque des revendications 1 à 4, **caractérisé en ce que** le pignon fonctionnel (24) peut également être utilisé comme un pignon de démarrage.

6. Dispositif d'entraînement selon l'une quelconque des revendications 1 à 5, **caractérisé en ce que** la roue creuse (30) est reliée par voie mécanique à un dispositif de blocage (70).

7. Dispositif d'entraînement selon l'une quelconque des revendications 1 à 6, **caractérisé en ce que** la cage (36, 36S) des roues planétaires (33) ou la roue solaire (38) peut être bloquée par voie mécanique à l'aide d'un dispositif de blocage (71).

8. Dispositif d'entraînement selon l'une quelconque des revendications 1 à 7, **caractérisé en ce que** la machine productrice (4) peut être séparée du dispositif d'entraînement (1) à l'aide d'un couplage (72).

9. Dispositif d'entraînement selon l'une quelconque des revendications 1 à 8, **caractérisé en ce que** la transmission mixte (2) présente un convertisseur de fréquence (20) avec un recyclage de l'énergie.
